# EUROPEAN PATENT SPECIFICATION

(11) **EP 1 549 969 B1**
(45) Date of publication and mention of the grant of the patent: **05.03.2008**
(21) Application number: 03720285.0
(22) Date of filing: 01.05.2003
(51) Int. Cl.: G01S 7/495

(54) **LASER TRANSPONDER FOR DISABLING A LASER-BASED SPEED MONITOR**
LASERTRANSPONDER ZUM DEAKTIVIEREN EINER LASERGEST TZTEN GESCHWINDIGKEITS BERWACHUNGSVORRICHTUNG
TRANSPONDEUR LASER POUR DESACTIVER UN DETECTEUR DE VITESSE A LASER

(30) Priority: 01.05.2002 US 138036
(43) Date of publication of application: 06.07.2005
(73) Proprietor: Bogh-Andersen, Torben, 2610 Rodovre (DK)
(72) Inventor: Bogh-Andersen, Torben, 2610 Rodovre (DK)
(74) Representative: Holme, Annelise
(86) International application number: PCT/DK2003/000286
(87) International publication number: WO 2003/093861

(56) References cited:
- DE-A1- 19 938 398
- US-A- 5 767 954
- US-A- 5 793 477

## Description

The present invention relates to a laser transponder for disabling a laser-based speed monitor, which is transmitting a monitor laser beam at a moving vehicle by transmitting a jamming laser beam to the laser-based speed monitor, whereby the monitor laser beam is in the shape of a monitor signal comprising monitor pulse trains having at least one pulse emitted with a first frequency f₁, and that the jamming laser beam is in the shape of a jamming signal comprising jamming pulse trains having at least one pulse emitted with a second frequency f₃.

Laser transponders for optically receiving and emitting information are today widely used in the fields of communication, surveillance and other areas where exchange of information is of interest.

There is however a growing demand for processing the information with a higher reliability of the communication link.

However, the transmission speed, the amounts of data transmitted and the reliability of the link are all closely connected and an improvement in one parameter will reduce the performance of the two others. Further the growing demand for yet smaller electronic circuitry adds even another factor to take into account, since smaller systems creates larger thermal problems.

US 5,767,954 and US 5,793,477 both describe a system for disabling a laser-based speed monitor. These systems receive and recognize an optical signal from a speed monitor after which they transmit a fixed high-energy signal to disable the speed monitor. However when triggered by a signal from a speed monitor these systems will respond with a high energy signal, covering a wide band of possible frequencies, which will risk overheating the laser diode if not disabled for a period of time afterward, rendering the systems useless for that period.

Moreover, the laser-based speed monitor can easily recognize this type of laser jamming transponders, and thus alerting the user of the speed monitor that this is being jammed.

A first aspect of the invention is therefore to provide a new and improved laser transponder and method for responding to a received signal capable of working continuously and reliably without overheating the components.

A second aspect of the invention is to provide a laser transponder and a method, which quickly and reliably will transmit the necessary information.

A third aspect of the invention is to provide a laser transponder and a method, which will make use of laser diodes instead of commonly, used IR-diodes.

A fourth aspect of the invention is to provide a laser transponder and a method, which will not be detected by a laser-based speed monitor as a jamming device.

The novel and peculiar consists in that the jamming laser beam is in the shape of a jamming signal comprising jamming pulse trains having at least one pulse emitted with a second frequency, where the monitor laser beam is in the shape of a monitor signal comprising monitor pulse trains having at least one pulse emitted with a first frequency.

In an advantageously embodiment of the invention the laser transponder comprises a microprocessor having stored in a database reference values for said first frequency of at least some of a number of known monitor signals, and for each of said reference values also having stored a corresponding value for said second frequency of the jamming signal, an optical receiver for receiving the monitor signal, a monitor signal converter for converting the monitor signal to an electrical monitor signal and sending said signal as input to the microprocessor, a program of the microprocessor for comparing the received electrical monitor signal with said reference values of the database, selecting the corresponding second frequency, or if no reference values are found selecting the first frequency as the second frequency, and generating an electric jamming signal with the selected frequency, a jamming signal converter for receiving said electrical jamming signal from the microprocessor and converting it to the jamming signal, and an optical transmitter for transmitting said jamming signal to the laser-based speed monitor.

The program can also comprise a method, to emit the jamming pulse train in a specific time interval corresponding to a time interval where the laser-based speed monitor expects to receive the reflection of its monitor pulse train.

In an embodiment of the invention a time interval is calculated based on one or more registered parameters, such as e.g. the delay in a circuit component or the time between two monitor pulse trains, in order to define a time interval wherein the jamming pulse train is to be transmitted. This advantageously allows the transponder to take into account variables such as time delays in the laser transponders electrical circuit or the current laser-based speed monitor acceptable delays in time and thereby providing a better and more reliable jamming of the laser-based speed monitor.

Further the program can also comprise a method to emit the jamming pulse train such that it is in phase with the monitor pulse train.

In another embodiment the first frequency can be a variable frequency and/or the second frequency can be a variable frequency, thereby allowing jamming of a laser-based speed monitor emitting a monitor signal comprising variable frequencies. Thereby allowing the laser transponder to better detect and identify a larger number of laser based speed monitors.

Earlier the use of laser diodes was limited to a very short operating time since the emitted jamming pulse train by earlier methods emitted information in the entire frequency band of all known laser-based speed monitors, thereby emitting a very high energy signal that would overheat the laser diode if it would have to work continuously.

Further the emitted high energy jamming pulse train is easily recognized by the laser-based speed monitor as a jamming signal and would thereby alert the user of the laser-based speed monitor accordingly.

Therefore it is also seen in many other applications that IR-diodes have been used. These have the advantage that they work at very low energies and thereby don't get overheated. However the IR-diodes emit maximum energy at 870 nm and at the operating wavelength of common laser emitting and laser receiving devices, which is at 905 nm, they only emit 20% of the energy emitted at 870 nm, which creates the need for several IR-diodes where you.only need one laser diode.

Further, another advantage of making it possible to have the laser diode to work continuously is that it can work with much higher energies than an IR-diode, typical an IR-diode emits light with 100mW where common laser diodes can emit up to 50W. and thereby creating a much higher reliability of the communication link.

Thus the invention provide a laser transponder and method that can recognize a laser-based speed monitor and generate a signal that contains enough information to jam the specific speed monitor, thereby avoiding large energy signals and making it possible to use a laser diode continuously and in a way that prevents the laser transponder to be detected by the laser-based speed monitor and without the laser diode getting overheated.

The invention will be explained in greater detail below, describing a preferred embodiment with reference to the drawing, in which
Fig. 1 shows a block diagram of a laser transponder according to the invention,
Fig. 2 shows a detailed circuitry of the hardware of a preferred embodiment of an apparatus according to the invention,
Fig. 2a,2b and 2c shows the circuitry in fig. 2 in an enlarged view,
Fig. 3 illustrates a received and transmitted signal,
Fig. 4 shows a flowchart of the method to process the signal in a microprocessor,
Fig. 5 shows a flowchart of the jamming sequence in the method described in fig. 4, and
Fig 6 shows a preferred jamming sequence.

In the following the term time frame is used as an example of a time interval only for illustrative purposes.

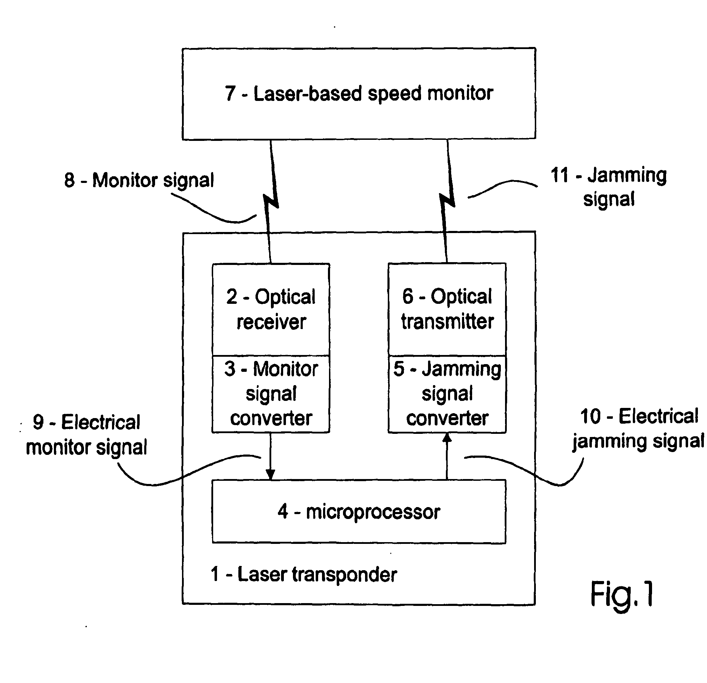

As shown in fig. 1 a laser transponder 1 comprises an optical receiver 2, a monitor signal converter 3, a microprocessor 4, a jamming signal converter 5 and an optical transmitter 6.

The optical transmitter 6 is in one embodiment a laser diode having typically wavelength of 904 - 905 nm, and is in another embodiment an IR diode with a typical wavelength of 870 nm.

The microprocessor 4 having stored in a database reference values for the frequency of at least some of a number of known monitor signals, and for each of said reference values also having stored a corresponding value for another frequency of the jamming signal. In one embodiment said reference values are changeable.

During operation a laser-based speed monitor 7 transmits a monitor laser signal 8, which is received by the optical receiver 2. The optical receiver transmits the monitor laser signal to the monitor signal converter 3, which converts this signal into an electrical monitor signal 9, which is transmitted to the microprocessor 4.

The microprocessor is having a program for comparing the received electrical monitor signal with said reference values of the database, selecting the corresponding second frequency, or if no reference values is found selecting the first frequency as the second frequency.

The microprocessor processes the electrical monitor signal into an electric jamming signal 10 with the selected second frequency and transmits this signal to the jamming signal converter 5 which converts the electric jamming signal into a jamming laser signal 11, which is transmitted back to the laser-based speed by means of the optical transmitter 6.

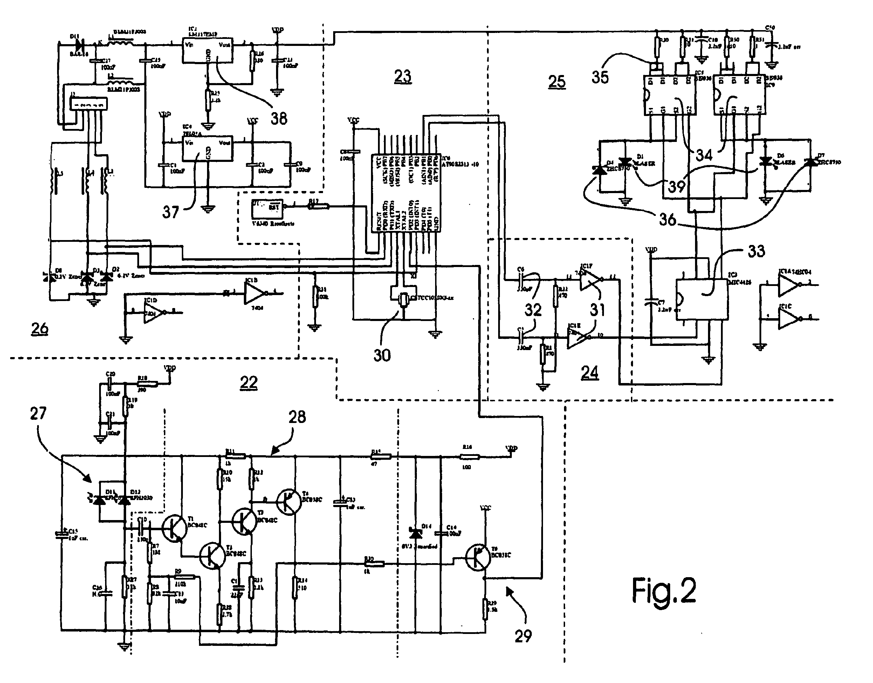

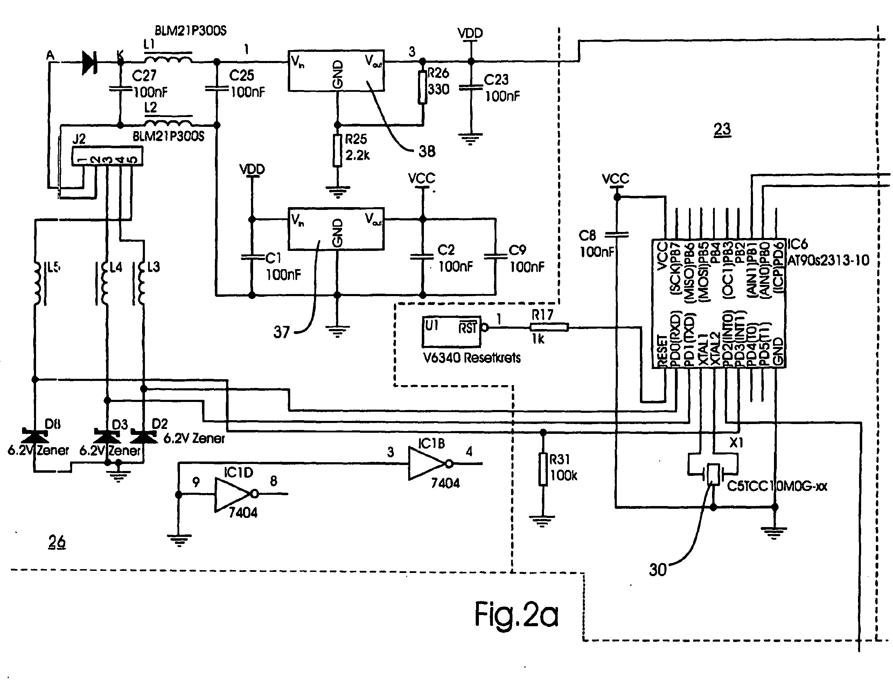

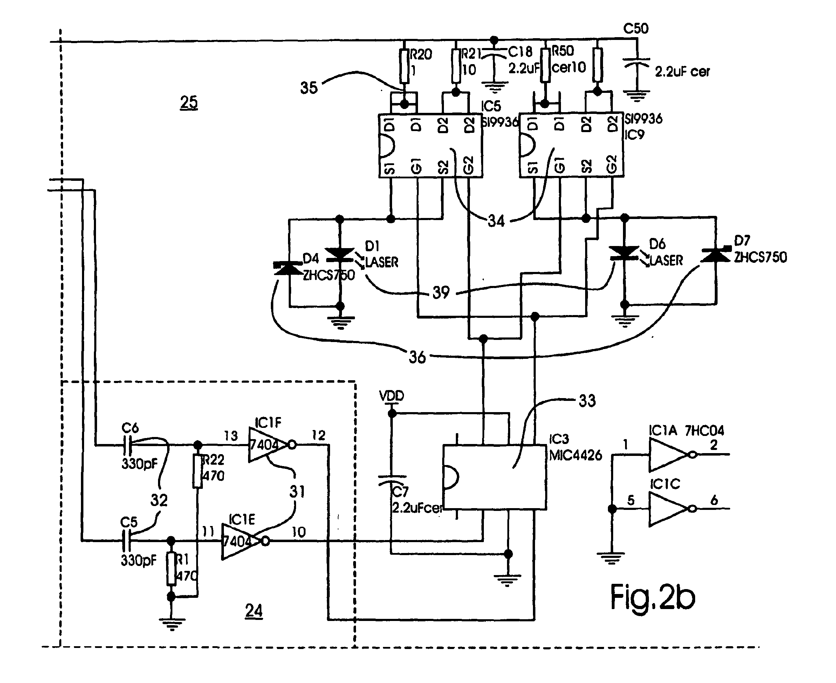

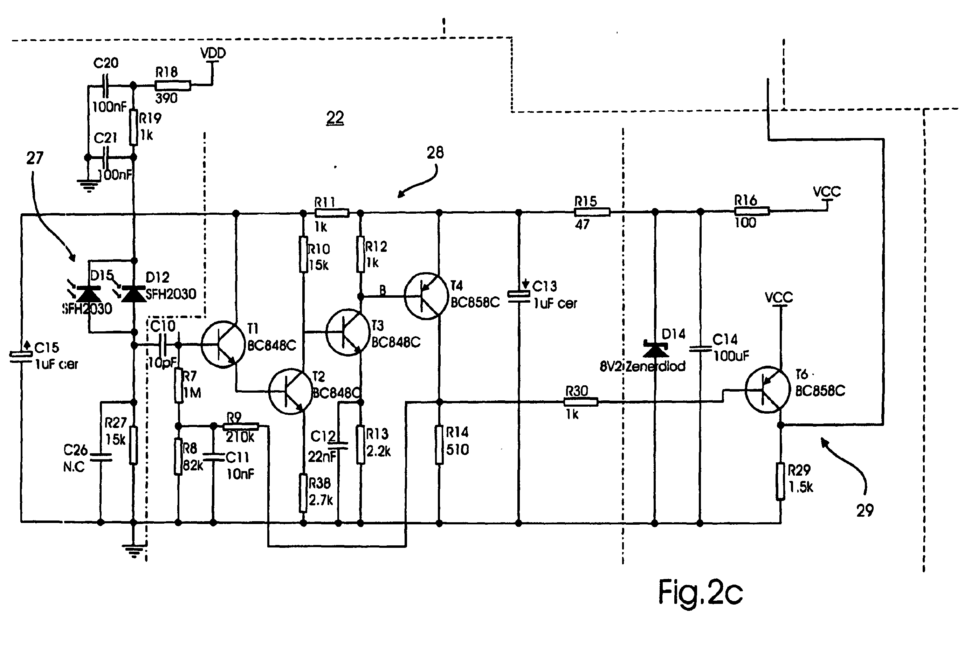

Fig. 2,2a,2b and 2c shows a detailed circuitry 21 of the preferred embodiment of the laser transponder according to the invention. The circuitry comprises of five subcircuits, an IR photo diode detector circuit 22, a microprocessor circuit 23, a jamming pulse width limiter circuit 24, a laser diode circuit 25 and a voltage regulator circuit 26.

The IR photo diode detector circuit comprises of two parallels coupled IR photodiodes 27 in a classic transistor amplifier configuration 28 known in the art with a negative feedback to avoid oscillation and temperature drift. The amplifier has a high gain (>50dB) and it amplifies the ac coupled electrical monitor signal coming from the two photo diodes.

In the shown embodiment two diodes are selected to increase the sensitivity of the detector.

The signal is then transmitted through a one-transistor smitt trigger stage 29 to ensure that the microprocessor receives a binary signal.

The microprocessor 23 is an 8 Bit Flash microcontroller. The microprocessor is a twenty pin CPU where eleven pins are used in the described embodiment of the invention. The GND pin and VCC pin connects the processor to the voltage regulator 26 to supply the processor during operation.

Interrupt and input pin PD2 is connected to the IR photo diode detector circuitry and voltage regulator respectively. Pins XTAL1 and XTAL2 are connected with an external 10 MHz oscillator 30, which functions as the clock for the microprocessor. Input and interrupt pin PD3, input pin PD0 and output pin PD1 are all connected to the voltage regulator. The RESET pin is connected to a simple reset circuitry well known in the art and is used for resetting the microprocessor. PB0 and PB1 are both output pins connected to the laser diode circuitry via the pulse width limiter 24.

The monitor signal from the IR photo diode detector circuitry will via the interrupt pin PD2 trigger a signal-processing program of the microprocessor.

When the signal processing program have processed the monitor signals it will output an electrical jamming signal on both output pins PB0 and PB1 which are connected to the pulse width limiter 24.

The jamming pulse width limiter is basically a differentiator as known in the art connected to the pins PB0 and PB1 and consisting of a buffer amplifier 31 and a capacitor 32, which limits the pulse width of the laser pulse in order not to overload laser diodes 39, in the described embodiment the pulse width is limited to a maximum of 150nS.

Thereby a very high peak power can be obtained resulting in a very effective jamming at long ranges without overloading the laser diode.

The laser diode driver 25 consists of two stages. The first stage consists of two FETs in an IC 33 driving the laser diodes driver FETs in two preferably identical IC's 34.

To protect the laser diodes when they are cold and thereby have a slow start function the CPU power up the laser diodes at a lower current for the first four pulses. This is realized by providing one of the two drivers 34 with a series resistor 35 that limits the current.

The laser diodes are further protected by free wheel diodes 36 preventing any current to flow backwards into the laser diodes.

The voltage regulator circuit 26 is a circuit well known in the art and comprise of two voltage regulators 3.7; 38. The first voltage regulator 37 is a 3-Terminal Positive Regulator from National Semiconductors and functions to supply all the digital IC's with a voltage of 5-volt VCC. The second voltage regulator 38 is a 3-Terminal Adjustable Regulator also from National Semiconductors, which function to adjust the main power supply voltage VDD that supplies the rest of the circuit including the laser diodes.

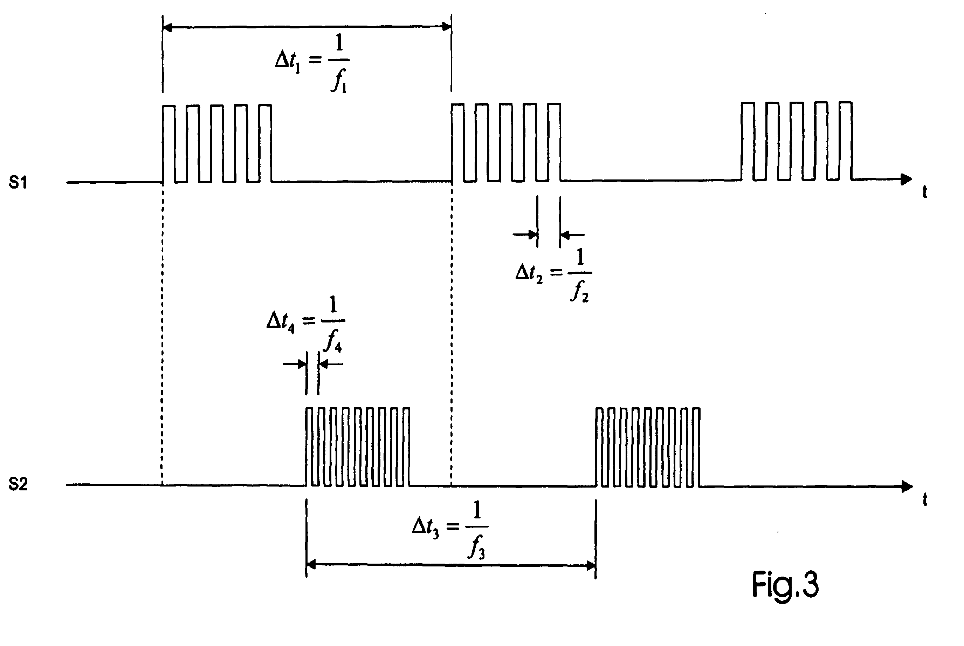

Fig.3 shows an example of the monitor signal S1 and jamming signal S2 of a preferred embodiment of the invention.

The monitor signal has a signal frequency f₁ and comprises of pulse trains each with a number of pulses and a pulse train frequency f₂.

The jamming signal have a signal frequency f₃ and comprises of pulse trains each with the same or a different number of pulses and a pulse train frequency f₄, which in fig. 3 is higher than f₂.

A time window is indicated by the two dotted lines and is having a time frame equal to that of Δt₁. This time window indicates the time frame in which the pulse train in the jamming signal must be transmitted in order to be sure that the laser-based speed monitor is registering said pulse train within said time frame as expected by the laser-based speed monitor, which therefore interprets the received pulse train as an reflection of the transmitted monitor pulse train.

Both the monitor pulse trains and the jamming pulse trains could consist of one or more pulses. Thus it is within the scope of the invention that a pulse train consisting of only one pulse in a monitor signal can be jammed by a pulse train consisting of a plurality of pulses from a jamming signal and vice versa. It will further be obvious for a person skilled in the art that a monitor pulse train consisting of only one pulse can be jammed by a pulse train also only consisting of one pulse as well as a monitor pulse train consisting of a plurality of pulses can be jammed by a pulse train also consisting of a plurality of pulses.

In an advantageously embodiment the jamming signal is transmitted in phase with the monitor pulse train, thereby securing that each jamming pulse train will be received within the expected time frame.

It should be understood that the above methods also are applicable in an application where the monitor signal comprises a modulated signal containing variable frequencies (not shown).

In such a case the monitor signal can be demodulated by methods known in the art and each frequency can be analysed separately by the method according to the invention.

Depending on the different frequencies the emitted jamming signal may also contain variable frequencies, each representing a reflection of the monitor signal from the moving vehicle at its respective frequency.

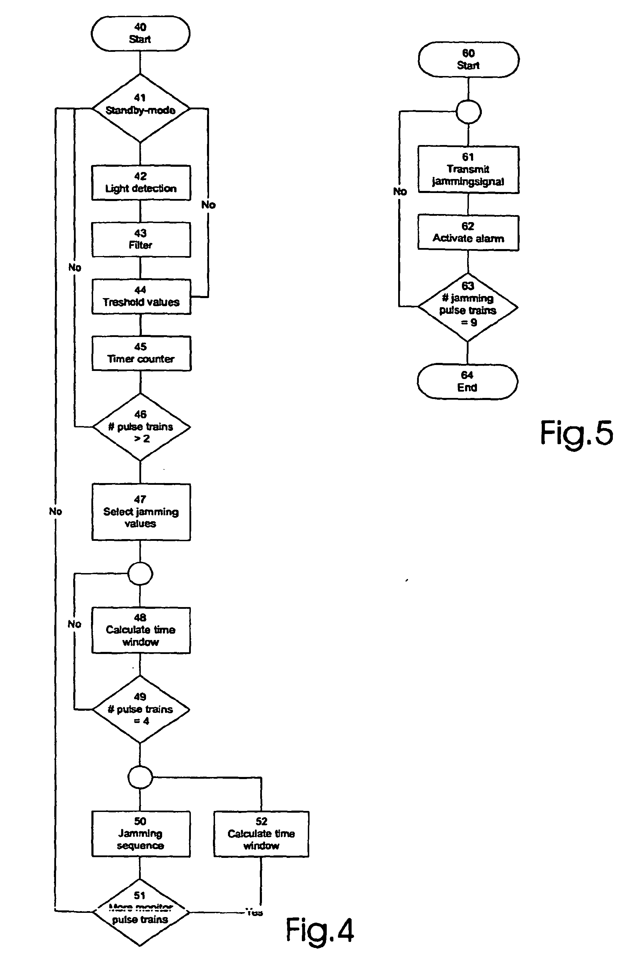

In fig. 4 a flowchart describes the course of the program of the microprocessor and how the electronic monitor signal is processed.

At start up 40 the program goes to standby-mode 41. Here it will idle until light detection 42 occurs, which will result in an electrical signal on the input pin PD2 which is an interrupt pin that triggers the program.

Afterwards the received signal will be processed in a filter system 43. Which in the present embodiment consist of two filters, first a direct hit filter which is a filter that is implemented to prevent the microprocessor to respond faulty due to saturation of the IR photo diode by a direct hit on the diode by the monitor laser beam. To prevent a faulty response the direct hit filter can in case the IR photo diode is saturated block the input terminal on the microprocessor for a period of time, e.g. 1ms.

After passing the direct hit filter the signal passes through a bandpass filter that have a frequency band that is set from 70Hz to 700Hz such that frequencies from 100Hz to 600Hz is passed in which known laser monitor equipment operates.

To improve the performance of the program and prevent unnecessary data to be processed and improving the effectiveness of the laser transponder the electrical monitor signals are compared against a number of threshold values 44, which is a set of values that define the boundaries for the program in order to recognize the received signal as a genuine monitor signal.

Such threshold values in the shown embodiment are pulse risetime, light intensity, but it shall be understood that many other threshold values could be added. Further a flimmer window is also activated at this time in the program which also serves to eliminate unwanted processing, of unwanted signals.

The flimmer window is implemented to prevent the software to falsely detect new signals due to noise on the rising flank on a pulse in the same pulse train in an already detected signal. This is realized by configuring the software to not detect any new signals in the flimmer window timeframe, which in the shown embodiment can be set to 50-100 ms from when the first pulse was detected.

If the signal is outside the defined threshold values the program will return to its standby-mode 41 and wait for another light detection. If the signal is within the defined threshold values the program will start a timer counter 45 which will time the interval between pulse trains and also count the number of pulse trains received.

The program of the microprocessor is calculating the expected time for receiving the next of x monitor pulse trains, sending the next jamming pulse train to the monitor signal converter at the expected time, and checking at the time, where the monitor pulse train number y is expected, if the laser-speed monitor still is transmitting and, if this is the case, sending a jamming pulse train to the monitor signal converter at the time where the monitor pulse train number y + 1 is expected, where x in one embodiment is 5 and y is 9.

In step 46 the program will control to see if it has detected three pulse trains in a given time frame. If the number of pulse trains is under three the program will return to standby-mode and await a new pulse train while the timer is running.

If the program detects that three relevant pulse trains have been detected in an accepted time set by the timer counter 45 the program will proceed to step 47, where it based on the received signal will select corresponding values for a jamming signal and a time window where it will transmit the generated jamming signal.

This is realised in the described embodiment by two different methods. The first method is by a table look-up where different frequencies of the signal and pulse trains correspond to different user defined jamming signals. This will mainly be the case when you receive a monitor signal from a known laser-based speed monitor.

The second method is used when a monitor signal is received and there is no corresponding jamming signal in the table. In other words the monitor signal is transmitted from an unknown laser-based speed monitor. In this case the program will select a user defined jamming signal. In the shown embodiment this is the first jamming signal in a table of the database of the microprocessor, but transmitted with the same signal frequency as the received monitor signal.

Another option is if no reference values is found to select an optional frequency stored in the database.

By selecting a specific signal frequency for jamming the laser-based speed monitor, as is done above, it is avoided to have to transmit a continuous jamming signal with a pulse frequency of 5 MHz, but instead transmitting a jamming signal comprising of pulse trains where each pulse train have a frequency which could be e.g. 5 MHz, and the signal frequency is set in an interval of known laser based speed monitors which is between 100Hz and 600Hz.

By avoiding a high energy signal that emits 5 MHz continuous pulses, as described above, which will produce a lot of heat in the optical emitter, the energy saved can be used to transmit higher powered pulses in the pulse trains or transmit jamming signals for longer periods of time and thereby improving the functionality of the laser transponder.

Further it is also possible for the user to adjust the values in the software such as the signal frequency and the timing of the jamming signal or the pulse train frequency or the number of pulses in a train. Thereby being able to fine-tune the laser transponder to suit the users specific needs.

The microprocessor is programmed for registration of the time elapsed between receiving successive monitor pulse train, calculating, based on said registrations, the time for receiving the next monitor pulse train, and generating an electrical jamming signal representing the jamming pulse trains, which is to be transmitted at said time.

In step 48 is calculated the time window in which to emit the jamming signal in order to make sure that the laser-based speed monitor receives the jamming signal at the time where it expects to receive the reflection of its monitor signal. The time window is calculated based on a mean value of the time difference between the present and previous pulse train as is shown by the dotted lines in fig. 3 and the number of pulse train that have passed.

To make sure that the time window is correctly calculated in the described embodiment the program will in step 49 first continue processing after the program have calculated the mean value for the time window over four pulse trains..

After calculating the time window the program will start a jamming sequence in step 50. The jamming sequence will be described in more detail below with reference to fig. 5.

When the program have completed the jamming sequence it will proceed to step 51 to see if the system still is receiving pulse trains. If it is it will go to step 52 where it will calculate a new time window based on previous time windows in the same way as described in step 48 and thereafter it will return to step 50 and repeat the jamming sequence.

In one embodiment the microprocessor is programmed for checking, for e.g. every five expected monitor pulse train, if the laser-speed monitor still is transmitting in step 51 and, if this is the case, sending jamming pulse train to the jamming signal converter when receiving the monitor pulse train number six.

If no more monitor signals are detected the program will return to standby-mode in step 41 where it will await the next light detection.

The jamming sequence in fig.4 is described in more detail in fig. 5. When the jamming sequence is started in step 60 the program will output the selected jamming signal in step 61.

After transmitting the signal the program will activate an alarm 62 which will alert the user that he or she is being monitored, typically when the monitor pulse train has been received more than a predetermined number of times.

The alarm in the described embodiment consists of both an audio alert and a visual alert. Where the audio alert is a small buzzer, which will buzz and the visual alert is a diode that will emit a light when activated. The two alerts can either be activated simultaneously or the user cans chose to only has one or even none activated.

Alternatively the visual alert could also be in the shape of a display, for example a LCD or a PDA computer, showing information such as the type of laser-speed monitor and its frequency information. Furthermore a voice module can also be built in to the transponder as a further audio alert, providing an electronic voice informing a user that he is being monitored.

In step 63 the program will pull the timer and ask how many pulses trains have passed. If less than nine pulse trains have been detected the program will return to step 61 and continue emitting the jamming signal and keeping the alarm activated. If nine pulse trains have passed the program will end the jamming sequence 64, turn off the alarm and return to step 51 in fig. 4.

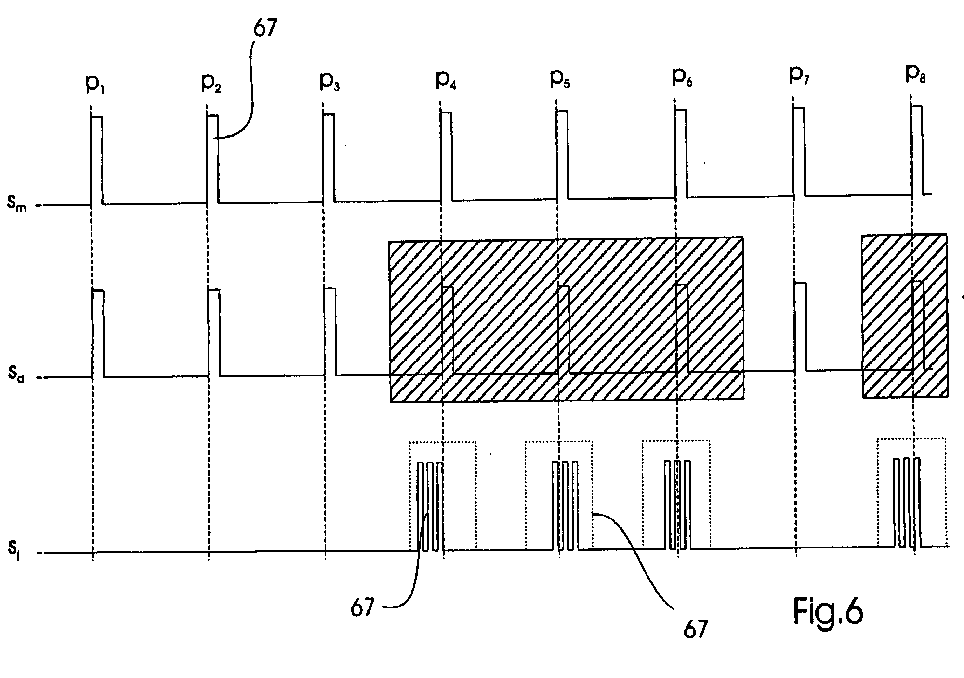

Figure 6 shows another example of a preferred jamming sequence.

A laser monitor emits a monitor signal sₘ consisting of fifty pulses 65 with a pulse frequency of 100 Hz. For illustrative purposes only the first eight pulses are shown at their respective times p₁, p₂, p₃, p₄, p₅, p₆, p₇ and p₈ in fig. 6.

In a preferred embodiment the transponder check for threshold values at the monitor pulses at times p₁, p₂, and p₃ as described in step. 44 in fig. 4, and if the monitor.pulses does not comply with the threshold values the transponder is restarted.

If the monitor pulse at time p₃ also comply with the threshold values the frequency of the monitor signal is calculated and a corresponding jamming signal sⱼ is looked up in a table.

As indicated by the hatched area the transponders receiver is disabled at times p₄, p₅ and p₆ to avoid interference while the transponder is jamming and saves energy.

A time frame 66 for emitting a jamming pulse train is calculated as described in step 48 in fig. 4 and within this time frame 66 the transponder emits a jamming pulse train 67 with a frequency of 5 MHz for 25 µS, which would result in 125 pulses. For illustrative purposes the emitted pulse trains 67 is shown having three pulses.

The time frame 66 is not necessarily calculated based solely on a time value describing a time difference between the monitor pulses, but can also be adjusted by other parameters such as, but not limited to, the type of laser-based speed monitor emitting the monitor signal where the parameters are stored in the database earlier described or in a separate database. Said latter database for example comprising comparative table or reference values established by experimentation or tests. Another possible usable parameter is for example delay values being the time delay in the electrical components of the circuitry of the laser transponder.

The time frame 66 as calculated is in the case illustrated in fig. 6 applied symmetrical around times p₄, p₅ and p₆.

At times p₅ and p₆ the transponder emit jamming pulse trains 67 within the calculated time frame 65 while the receiver continues to be disabled.

It should be understood that the jamming pulse trains 67 not necessarily have to be transmitted at the exact same time each time, as long as it is within the calculated time frame. As it is seen at times p₄, p₅ and p₆ the jamming pulse trains are emitted at different points within the provided time frame 66.

At time p₇ the transmitter stops emitting jamming signals and the receiving part of the transponder is activated and checks to see if the laser monitor still is emitting pulses.

Since the laser monitor still is emitting pulses the transponder continues jamming at time p₈ while the detector s_{d} is deactivated again.

The skilled person will understand that the laser transponder according to the invention as described above also could be used for other jamming purposes for example distance jamming where the speed of the vehicle is zero.

It is further within the scope of the invention that the transponder can receive and transmit optical signals with other wavelengths than the ones described above.

## Claims

1. A laser transponder (1) for disabling a laser-based speed monitor (7), which is transmitting a monitor laser beam at a moving vehicle by transmitting a jamming laser beam to the laser-based speed monitor (7), whereby the monitor laser beam is in the shape of a monitor signal (8; s1; sₘ) comprising monitor pulse trains (65) having at least one pulse emitted with a first frequency f₁, and that the jamming laser beam is in the shape of a jamming signal (11; s2; sⱼ) comprising jamming pulse trains (67) having at least one pulse emitted with a second frequency f₃, **characterized in that** the laser transponder comprise
- a microprocessor (4) having stored in a database reference values for said first frequency f₁ of at least some of a number of known monitor signals, and for each of said reference values also having stored a corresponding value for said second frequency f₃ of the jamming signal,
- an optical receiver (2) for receiving the monitor signal (s1; sₘ),
- an monitor signal converter (3) for converting the monitor signal (8; s1; sₘ) to an electrical monitor signal (9; s1; sₘ) and sending said signal as input to the microprocessor (4),
- a program of the microprocessor (4) for comparing the received electrical monitor signal (9) with said reference values of the database, selecting the corresponding second frequency f₃, or if no reference values is found either selecting the first frequency f₁ to be the second frequency f₃ or to be an optional frequency stored in the database, and generating an electric jamming signal (10; s2; sⱼ) with the selected frequency,
- a jamming signal converter (5) for receiving said electrical jamming signal (10; s2; sⱼ) from the microprocessor (4) and converting it to the jamming signal (11; s2; sⱼ), and
- an optical transmitter (6) for transmitting said jamming signal (11; s2; sⱼ) to the laser-based speed monitor (7).

2. A laser transponder (1) according to claim 1, **characterized in that** the jamming signal (11; s2; sⱼ) has another frequency than the monitor signal (8; s1; sₘ).

3. A laser transponder (1) according to claim 1 or 2, **characterized in that** the jamming pulse trains (67) having at least one pulse is transmitted with a higher frequency than the monitor pulse train (65) having at least one pulse.

4. A laser transponder (1) according to claim 1, 2, or 3, **characterized in that** the first frequency f₁ is a variable frequency and/or that the second frequency is a variable frequency f₂.

5. A laser transponder (1) according to claim 1, 2, 3 or 4, **characterized in that** the jamming signal (11; s2; sⱼ) is transmitted in phase with the monitor signal (8; s1; sₘ).

6. A laser transponder (1) according to any of the claims 1 - 5, **characterized in that** the microprocessor (4) is programmed for performing at least the steps of,
- registration of the time elapsed between receiving successive monitor pulse trains (65) having at least one pulse,
- calculating, based on said registrations, the time for receiving the next monitor pulse train (65) having at least one pulse, and
- generating an electrical jamming signal (10) representing the jamming pulse trains (67) having at least one pulse, which is to be transmitted at said time.

7. A laser transponder (1) according to any of the claims 1 - 6, **characterized in that** the microprocessor (4) further or alternatively calculates a time interval (66) and that the laser transponder transmits the jamming pulse train (67) having at least one pulse within the calculated time interval (66).

8. A laser transponder (1) according to claim 7, **characterized in that** the time interval (66) further is a calculated time interval (66) based on one or more of the following registered parameters:
- the parameter being a time value comprising the registered time elapsed between at least two successive monitor pulse trains (65) having at least one pulse,
- the parameter being a table or reference value comprising at least one value from said or another database comprising values corresponding to known laser-based speed monitors, and
- the parameter being a delay value comprising a value determined by the time delay in the laser transponders electrical components.

9. A laser transponder (1) according to any of the claims 1 - 8, **characterized in that** the microprocessor (4) is programmed for
- calculating the expected time for receiving the next of x monitor pulse trains (65) having at least one pulse,
- sending the next jamming pulse train (67) having at least one pulse to the jamming signal converter (5) at the expected time, and
- checking at the time, where the monitor pulse train (65) number y is expected, if the laser-speed monitor (7) still is transmitting and, if this is the case, sending a jamming pulse train (67) having at least one pulse to the jamming signal converter (5) at the time where the monitor pulse train (65) number y + 1 is expected.

10. A laser transponder (1) according to claim 9, **characterized in that** x = 5 and y = 9.

11. A laser transponder (1) according to claim 9 or 10, **characterized in that** the microprocessor (4) is programmed for checking, for every five expected monitor pulse trains (65) having at least one pulse, if the laser-speed monitor still is transmitting and, if this is the case, sending jamming pulse trains (67) having at least one pulse to the jamming signal converter (5) when receiving the monitor pulse train (65) number six.

12. A laser transponder (1) according to any of the claims 1 - 11, **characterized in that** the optical transmitter (6) is a laser diode with a typical wavelength of 904 - 905 nm.

13. A laser transponder (1) according to any of the claims 1 - 12, **characterized in that** the optical transmitter (6) is an IR diode with a typical wavelength of 870 nm.

14. A laser transponder (1) according to any of the claims 1 - 13, **characterized in that** a sound alarm adapted for being activated if a monitor pulse train (65) having at least one pulse has been received more than a predetermined number of times.

15. A laser transponder (1) according to any of the claims 1 - 14, **characterized in that** the database is adapted in such a way that the stored values are changeable.

16. The use of a laser transponder (1) according to any of the claims 1-15 for disabling a laser-based speed monitor (7), which is transmitting a monitor laser beam at a moving vehicle by transmitting a jamming laser beam to the laser-based speed monitor (7), whereby the monitor laser beam is in the shape of a monitor signal (8; s1; sₘ) comprising monitor pulse trains (65) having at least one pulse emitted with a first frequency f₁, **characterized in that** the jamming laser beam is in the shape of a jamming signal (11; s2; sⱼ) comprising jamming pulse trains (67) having at least one pulse emitted with a second frequency f₃ by means of an optical transmitter (6) for transmitting said jamming signal (11; s2; sⱼ) to the laser-based speed (7) monitor in phase with the monitor signal (8; s1; sₘ).

17. The use of a laser transponder (1) according to claim 16, **characterized in that** the laser transponder (1) comprise a microprocessor (4) programmed for,
- registration of the time elapsed between receiving successive monitor pulse trains (65) having at least one pulse,
- calculating, based on said registrations, the time for receiving the next monitor pulse train (65) having at least one pulse, and
- generating the jamming signal (11; s2; sⱼ) representing the jamming pulse trains (67) having at least one pulse, which is to be transmitted at said time.

18. The use of a laser transponder (1) according to claim 17, **characterized in that** that the laser transponder (1) further comprise that the microprocessor (4) is programmed for,
- calculating the expected time for receiving the next of x monitor pulse trains (65) having at least one pulse,
- sending the next jamming pulse train (67) having at least one pulse to the jamming signal converter (5) at the expected time, and
- checking at the time, where the monitor pulse train (65) having at least one pulse no. y is expected, if the laser-speed monitor (7) still is transmitting and, if this is the case, sending a jamming pulse train (67) having at least one pulse to the jamming signal converter (5) at the time where the monitor pulse train (65) having at least one pulse no. y + 1 is expected.

19. The use of a laser transponder (1) according to claim 18, **characterized in that** the microprocessor (4) is programmed for checking, for every five expected monitor pulse trains (65) having at least one pulse, if the laser-speed monitor (7) still is transmitting and, if this is the case, sending jamming pulse trains (67) having at least one pulse to the jamming signal converter (5) when receiving the monitor pulse train (65) having at least one pulse number six.

20. The use of laser transponder (1) according to any of the claims 16 - 19, **characterized in that** a sound alarm adapted for being activated if a monitor pulse train (65) having at least one pulse has been received more than a predetermined number of times.

21. The use of a laser transponder (1) according to any of the claims 16 - 20, **characterized in that** the transponder comprises a database where the database is adapted in such a way that the stored values are changeable.

22. A method for disabling a laser-based speed monitor monitor (7), which is transmitting a monitor laser beam in the shape of a monitor signal (8; s1; sₘ) with a first frequency f₁, transmitting a jamming laser beam in the shape of a jamming signal (11; s2; sⱼ) with a second frequency f₃, **characterized in that** the method further comprise
- storing in a database of a microprocessor (4) reference values for said first frequency f₁ of at least some of a number of known monitor signals (8; s1; sₘ), and for each of said reference values also having stored a corresponding value for said second frequency f₃ of the jamming signal (8; s1; sₘ),
- receiving the monitor signal (8; s1; sₘ) by means of an optical receiver (2),
- converting by means of an monitor signal converter (3) the monitor signal (8; s1; sₘ) to an electrical monitor signal (9; s1; sₘ) and sending said signal as input to the microprocessor (4),
- comparing by means of a program of the microprocessor (4) the received electrical monitor signal (9; s1; sₘ) with said reference values of the database, selecting the corresponding second frequency f₃, or if no reference values is found either selecting the first frequency f₁ to be the second frequency f₃ or to be an optional frequency stored in the database, and generating an electric jamming signal (10; s2; sᵢ) with the selected frequency,
- converting by means of a jamming signal converter (5) said electrical jamming signal (10; s2; sⱼ) to the jamming signal (11; s2; sⱼ), and
- transmitting by means of an optical transmitter (6) said jamming signal (11; s2; sⱼ) to the laser-based speed monitor (7).

## Patentansprüche

1. Ein Lasertransponder (1) zum Außerfunktionsetzen eines laserbasierten, einen Überwachungslaserstrahl an ein sich bewegenden Fahrzeug aussendenden Geschwindigkeitsüberwachungsgeräts (7) durch Aussenden eines Störlaserstrahls an das laserbasierte Geschwindigkeitsüberwachungsgerät (7), wobei der Überwachungsstrahl in Form eines Überwachungssignals (8; s1; sₘ) mit Überwachungsimpulszügen (65) ist, von denen wenigstens ein Impuls mit einer ersten Frequenz f₁ emittiert wird, ist, und der Störlaserstrahl in Form eines Störsignals (11; s2; sⱼ) mit Störimpulszügen (67) ist, von denen wenigstens ein Impuls mit einer zweiten Frequenz f₃ emittiert wird, ist,
**dadurch gekennzeichnet, dass** der Lasertransponder aufweist:
- einen Mikroprozessor (4) mit einer Datenbasis, in der Referenzwerte für die erste Frequenz f₁ von wenigstens einigen aus einer Anzahl von bekannten Überwachungsgeräten und weiter für jeden der Referenzwerte ein entsprechender Wert für die zweite Frequenz f₃ des Störsignals gespeichert sind,
- einen optischen Empfänger (2) zum Empfangen des Überwachungssignals (s1, sₘ),
- einen Überwachungssignalkonverter (3) zum Wandeln des Überwachungssignals (8; s1; sₘ) in ein elektrisches Überwachungssignal (9; s1, sₘ) und zum Übergeben des Signals als Eingabe an den Mikroprozessor (4),
- ein Programm des Mikroprozessors (4) zum Vergleichen des empfangenen elektrischen Überwachungssignals mit den Referenzwerten der Datenbasis, Auswählen der entsprechenden zweiten Frequenz f₃ oder, wenn kein Referenzwert gefunden wurde, entweder Auswählen der ersten Frequenz f₁ als zweite Frequenz f₃ oder einer optionalen Frequenz, die in der Datenbasis gespeichert ist, und Erzeugen eines elektrischen Störsignals (10; s2, sⱼ) mit der ausgewählten Frequenz,
- ein Störsignalwandler (5) zum Empfangen des elektrischen Störsignals (10; s2, sⱼ) von dem Mikroprozessor und dessen Wandeln in das Störsignal (11; s2; sⱼ) und
- einen optischen Sender (6) zum Senden des Störsignals (11; s2; sⱼ) zu dem laser-basierten Geschwindigkeitsüberwachungsgerät (7).

2. Ein Lasertransponder (1) nach Anspruch 1, **dadurch gekennzeichnet, dass** das Störsignal (11; s2; sⱼ) eine andere Frequenz als das Überwachungssignal (8; s1; sₘ) hat.

3. Ein Lasertransponder (1) nach Anspruch 1 oder 2, **dadurch gekennzeichnet, dass** die Störimpulszüge (67) wenigstens einen Impuls haben, der mit einer höheren Frequenz als der des Überwachungsimpulszugs (65) mit dem wenigstens einen Impuls ausgesendet wird.

4. Ein Lasertransponder (1) nach Anspruch 1, 2, oder 3, **dadurch gekennzeichnet, dass** die erste Frequenz f₁ eine variable Frequenz ist und/oder dass die zweite Frequenz eine variable Frequenz f₂ ist.

5. Ein Lasertransponder (1) nach den Ansprüchen 1, 2, 3 oder 4, **dadurch gekennzeichnet, dass** das Störsignal (11; s2; sⱼ) in Phase mit dem Überwachungssignal (8; s1; sₘ) übertragen wird.

6. Ein Lasertransponder (1) nach einem der Ansprüche 1-5, **dadurch gekennzeichnet, dass** der Mikroprozessor (4) zum Ausführen wenigstens der folgenden Schritte programmiert ist:
- Registrieren der Zeit, die zwischen dem Empfang von aufeinander folgenden Überwachungsimpulszügen (65) mit dem wenigstens einen Impuls empfangen worden ist, verstrichen ist;
- Berechnen, basierend auf diesen Registrierungen, des Zeitpunkts des Empfangen des nächsten Überwachungsimpulszugs (65) mit dem wenigstens einen Impuls, und
- Erzeugen eines den wenigstens einen Impuls aufweisenden Störimpulszugs (67), repräsentierenden elektrischen Störsignals (10), das zu dem Zeitpunkt zu übertragen ist.

7. Ein Lasertransponder (1) nach einem der Ansprüche 1-6, **dadurch gekennzeichnet, dass** der Mikroprozessor (4) weiter oder alternativ ein Zeitintervall (66) berechnet und dass der Lasertransponder den Störimpulszug (67) mit dem wenigstens einen Impuls innerhalb des berechneten Zeitintervalls (66) überträgt.

8. Ein Lasertransponder (1) nach Anspruch 7, **dadurch gekennzeichnet, dass** das Zeitintervall (66) weiter ein basierend auf einem oder mehreren der folgenden registrierten Parametern berechnetes Zeitintervall (66), ist:
- der Parameter ist ein Zeitwert, der die registrierte Zeit, die zwischen wenigstens zwei aufeinander folgenden Monitorimpulszügen (65) mit dem wenigstens einen Impuls verstrichen ist;
- der Parameter ist eine Tabelle oder ein Referenzwert, der wenigstens einen Wert aus der oder einer anderen Datenbasis mit den Werten, die bekannten laserbasierenden Überwachungsmonitoren entspricht, aufweist und
- der Parameter ist eine Verzögerungszeit mit einem Wert, der durch die Zeitverzögerung in den elektrischen Komponenten des Lasertransponders bestimmt wird.

9. Ein Lasertransponder (1) nach einem der Ansprüche 1-8, **dadurch gekennzeichnet, dass** der Mikroprozessor programmiert ist zum
- Kalkulieren der erwarteten Zeit zum Empfangen des nächsten von x Überwachungsimpulszügen (65) mit dem wenigstens einen Impuls,
- Senden des nächsten Störimpulszug (67) mit dem wenigstens einen Impuls zu dem Störsignalkonverter (5) zu der erwarteten Zeit, und
- Prüfen zu dem Zeitpunkt, zu dem der Überwachungsimpulszug (65) Nummer y erwartet wird, ob der laserbasierte Geschwindigkeitsüberwachungsmonitor (7) noch überträgt und, wenn dies der Fall ist, Aussenden eines Störimpulszugs (67) mit dem wenigstens einen Impuls an den Störsignalkonverter (5) zu dem Zeitpunkt, zu dem der Überwachungsimpulszug (65) y + 1 erwartet wird.

10. Ein Lasertransponder (1) nach Anspruch 9, **dadurch gekennzeichnet, dass** x = 5 und y = 9 ist.

11. Ein Lasertransponder (1) nach Anspruch 9 oder 10, **dadurch gekennzeichnet, dass** der Mikroprozessor (4) programmiert ist zum Prüfen bei jeweils fünf erwarteten, den wenigstens einen Impuls habenden Überwachungsimpulszügen (65), ob das laserbasierte Geschwindigkeitsüberwachungsgerät noch sendet und, wenn dies der Fall ist, Aussenden von Störimpulszügen (65) mit dem wenigstens einen Impuls an den Störsignalkonverter (5), wenn der Monitorimpulszug (65) Nummer sechs empfangen wird.

12. Ein Lasertransponder (1) nach einem der Ansprüche 1-11, **dadurch gekennzeichnet, dass** der optische Sender (6) eine Laserdiode mit einer typischen Wellenlänge von 904 - 905 nm ist.

13. Ein Lasertransponder (1) nach einem der Ansprüche 1-12, **dadurch gekennzeichnet, dass** der optische Sender (6) eine IR Diode mit einer typischen Wellenlänge von 870 nm ist.

14. Ein Lasertransponder (1) nach einem der Ansprüche 1-13, **dadurch gekennzeichnet, dass** ein Tonalarm vorgesehen ist, der aktiviert wird, wenn ein Monitorimpulszug (65) mit dem wenigstens einen Impuls mehr als die vorgegebene Anzahl von Malen empfangen worden ist.

15. Ein Lasertransponder (1) nach einem der Ansprüche 1-14, **dadurch gekennzeichnet, dass** die Datenbasis derart eingerichtet ist, dass die gespeicherten Werte änderbar sind.

16. Die Verwendung eines Lasertransponder (1) nach einem der Ansprüche 1- 15 zum Außerfunktionsetzen eines laserbasierten, einen Überwachungslaserstrahl an ein sich bewegenden Fahrzeug aussendenden Geschwindigkeitsüberwachungsgeräts (7) durch Aussenden eines Störlaserstrahls an das laserbasierte Geschwindigkeitsüberwachungsgerät (7), wobei der Überwachungsstrahl in Form eines Überwachungssignals (8; s1; sₘ) mit Überwachungsimpulszügen (65) ist, von denen wenigstens ein Impuls mit einer ersten Frequenz f₁ emittiert wird, ist, **dadurch gekennzeichnet, dass** der Störlaserstrahl in Form eines Störsignals (11; s2; sⱼ) mit Störimpulszügen (67) ist, von denen wenigstens ein Impuls mit einer zweiten Frequenz f₃ emittiert wird, ist, mittels eines optischen Senders (6) zum Senden des Störsignals (11; s2; sⱼ) zu dem laser-basierten Geschwindigkeitsüberwachungsgerät (7) in Phase mit dem Überwachungssignal (8; s1, sₘ).

17. Die Verwendung eines Lasertransponders (1) nach Anspruch 16, **dadurch gekennzeichnet, dass** der Lasertransponder (1) einen Mikroprozessor (4) aufweist, der programmiert ist zum
- Registrieren der Zeitdauer, die zwischen dem Empfangen von aufeinander folgenden Überwachungsimpulszügen (65), die den wenigstens einen Impuls beinhalten, verstrichen ist;
- Berechnen, basierend auf diesen Registrierungen, der Zeitdauer bis zum Empfangen des nächsten Überwachungsimpulszugs (65), der den wenigstens einen Impuls aufweist, und
- Erzeugen des Störsignals (11; s2; sⱼ), die die Störimpulszüge (67) mit dem wenigstens einen Impuls repräsentieren, der zu dem Zeitpunkt ausgesendet wird.

18. Die Verwendung eines Lasentransponders (1) nach Anspruch 17, **dadurch gekennzeichnet, dass** der Mikroprozessor (4) programmiert ist zum:
- Berechnen des erwarteten Zeitpunkts zum Empfangen der nächsten x Überwachungsimpulszüge (65) mit dem wenigstens einen Impuls,
- Senden des nächsten Störimpulszugs (67) mit dem wenigstens einen Impuls an den Störimpulskonverter (5) zu dem erwarteten Zeitpunkt; und
- Prüfen zu dem Zeitpunkt, zu dem der den wenigstens einen Impuls habende Überwachungsimpulszug (65) Nummer y erwartet wird, ob das Lasergeschwindigkeitsüberwachungsgerät (7) noch sendet, und falls dies der Fall ist, Aussenden eines den wenigstens einen Impuls aufweisenden Störimpulszug (67), zu dem Störsignalkonverter (5) zu dem Zeitpunkt, zu dem der Überwachungsimpulszug (65) mit dem wenigstens einen Impuls y + 1 erwartet wird.

19. Die Verwendung eines Lasentransponders (1) nach Anspruch 18, **dadurch gekennzeichnet, dass** der Mikroprozessor (4) programmiert ist zum Prüfen bei jeweils fünf erwarteten Überwachungsimpulszügen (65) mit dem wenigstens einen Impuls, ob das Lasergeschwindigkeitsgerät (7) noch sendet, und, wenn dies der Fall ist, Aussenden von Störimpulszügen (67) mit dem wenigstens einen Impuls an den Störsignalkonverter (5) wenn der Monitorimpulszug (65) mit dem wenigstens einen Impuls Nummer 6 empfängt.

20. Die Verwendung eines Lasentransponders (1) nach einem der Ansprüche 16-19, **dadurch gekennzeichnet, dass** ein Tonalarm vorgesehen ist, der aktiviert wird, wenn der Überwachungsimpulszug (65) mit dem wenigstens einen Impuls mehr als eine vorgegebene Anzahl von Malen empfangen worden ist.

21. Die Verwendung eines Lasertransponders (1) nach einem der Ansprüche 16-20, **dadurch gekennzeichnet, dass** die Transponder eine Datenbasis aufweist, wobei die Datenbasis derart eingerichtet ist, dass die gespeicherten Werte änderbar sind.

22. Ein Verfahren zum Außerfunktionsetzen eines laserbasierten, einen Überwachungslaserstrahl in Form eines Überwachungssignals (8; s1, sₘ) mit einer ersten Frequenz f₁ aussendenden Geschwindigkeitsüberwachungsgeräts (7) durch Aussenden eines Störlaserstrahl in Form eines Störsignals (11; s2; sⱼ) mit einer zweiten Frequenz f₃,
**dadurch gekennzeichnet, dass** das Verfahren weiter aufweist:
- Speichern von Referenzwerte für die erste Frequenz f₁ von wenigstens einigen aus einer Anzahl von bekannten Überwachungsgeräten und weiter für jeden der Referenzwerte ein entsprechenden Wert für die zweite Frequenz f₃ des Störsignals, in einer Datenbasis eines Mikroprozessors (4),
- Empfangen des Überwachungssignals (8, s1; sₘ) mittels eines optischen Empfängers (2),
- Wandeln des Überwachungssignals (8; s1; sₘ) in ein elektrisches Überwachungssignal (9; s1, sₘ) und Übergeben des Signals als Eingabe an den Mikroprozessor (4) mittels eines Überwachungssignalkonverters (3),
- Vergleichen des empfangenen elektrischen Überwachungssignals mit den Referenzwerten der Datenbasis, Auswählen der entsprechenden zweiten Frequenz f₃ oder, wenn kein Referenzwert gefunden wurde, entweder Auswählen der ersten Frequenz f₁ als zweite Frequenz f₃ oder einer optionalen Frequenz, die in der Datenbasis gespeichert ist und Erzeugen eines elektrischen Störsignals (10; s2, sⱼ) mit der ausgewählten Frequenz mittels eines Programms des Mikroprozessors (4),
- Wandeln des elektrischen Störsignals (10; s2, sⱼ) in das Störsignal (11; s2; sⱼ) mittels eines Störsignalwandlers (5) und
- Senden des Störsignals (11; s2; sⱼ) zu dem laserbasierten Geschwindigkeitsüberwachungsgerät (7) mittels eines optischen Senders (6).

## Revendications

1. Transpondeur laser (1) pour désactiver un moniteur de vitesse laser (7), qui émet un faisceau laser de surveillance à un véhicule en déplacement en émettant un faisceau laser de brouillage vers le moniteur de vitesse laser (7), le faisceau laser de surveillance se présentant sous forme d'un signal de surveillance (8 ; s1 ; sₘ) comprenant des trains d'impulsions de surveillance (65) comprenant au moins une impulsion émise à une première fréquence f₁, tandis que le faisceau laser de brouillage se présente sous forme d'un signal de brouillage (11 ; s2 ; sⱼ) comprenant des trains d'impulsions de brouillage (67) comprenant au moins une impulsion émise à une seconde fréquence f₃, **caractérisé en ce que** le transpondeur laser comprend :
- un microprocesseur (4) comprenant une base de données dans laquelle sont stockées des valeurs de référence pour ladite première fréquence f₁ d'au moins certains signaux parmi plusieurs signaux de surveillance connus et dans laquelle, pour chacune desdites valeurs de référence, est également stockée une valeur correspondante pour ladite seconde fréquence f₃ du signal de brouillage ;
- un récepteur optique (2) pour recevoir le signal de surveillance (s1 ; sₘ) ;
- un convertisseur de signal de surveillance (3) pour convertir le signal de surveillance (8 ; s1 ; sₘ) en un signal de surveillance électrique (9 ; s1 ; sₘ) et pour envoyer ledit signal en qualité d'entrée vers le microprocesseur (4) ;
- un programme du microprocesseur (4) pour comparer le signal de surveillance électrique reçu (9) aux dites valeurs de référence de la base de données, pour choisir la seconde fréquence correspondante f₃ ou, si aucune valeur de référence n'est trouvée, pour choisir la première fréquence f₁ en qualité de seconde fréquence f₃ ou en qualité de fréquence optionnelle stockée dans la base de données, et pour générer un signal électrique de brouillage (10 ; s2 ; sⱼ) à l'aide de la fréquence choisie ;
- un convertisseur de signal de brouillage (5) pour recevoir ledit signal électrique de brouillage (10 ; s2 ; sⱼ) provenant du microprocesseur (4) et pour le convertir en signal de brouillage (11 ; s2 ; sⱼ) ; et
- un émetteur optique (6) pour émettre ledit signal de brouillage (11 ; s2 ; sⱼ) vers ledit moniteur de vitesse laser (7).

2. Transpondeur laser (1) selon la revendication 1, **caractérisé en ce que** le signal de brouillage (11 ; s2 ; sⱼ) possède une autre fréquence que le signal de surveillance (8 ; s1 ; sₘ).

3. Transpondeur laser (1) selon la revendication 1 ou 2, **caractérisé en ce que** le train d'impulsions de brouillage (67) comportant au moins une impulsion est transmis à une fréquence plus élevée que le train d'impulsions de surveillance (65) comportant au moins une impulsion.

4. Transpondeur laser (1) selon la revendication 1, 2 ou 3, **caractérisé en ce que** la première fréquence f₁ est une fréquence variable et/ou **en ce que** la seconde fréquence est une fréquence variable f₂.

5. Transpondeur laser (1) selon la revendication 1, 2, 3 ou 4, **caractérisé en ce que** le signal de brouillage (11 ; s2 ; sⱼ) est transmis en phase avec le signal de surveillance (8; s1 ; sₘ).

6. Transpondeur laser (1) selon l'une quelconque des revendications 1 à 5, **caractérisé en ce que** le microprocesseur (4) est programmé pour effectuer au moins les étapes consistant à :
- enregistrer le temps écoulé entre les réceptions de trains d'impulsions de surveillance successifs (65) comportant au moins une impulsion ;
- calculer, en fonction des dits enregistrements, le moment de réception du train d'impulsions de surveillance suivant (65) comportant au moins une impulsion ; et
- générer un signal électrique de brouillage (10) représentant les trains d'impulsions de brouillage (67) comportant au moins une impulsion, que l'on doit transmettre au dit moment.

7. Transpondeur laser (1) selon l'une quelconque des revendications 1 à 6, **caractérisé en ce que** le microprocesseur (4) calcule en outre, ou en variante, un intervalle de temps (66), et **en ce que** le transpondeur laser émet le train d'impulsions de brouillage (67) comportant au moins une impulsion dans l'intervalle de temps calculé (66).

8. Transpondeur laser (1) selon la revendication 7, **caractérisé en ce que** l'intervalle de temps (66) consiste en outre en un intervalle de temps calculé (66) en fonction d'un ou de plusieurs des paramètres enregistrés suivants :
- un paramètre consistant en une valeur de temps comprenant le temps écoulé enregistré entre au moins deux trains d'impulsions de surveillance successifs (65) comportant au moins une impulsion ;
- un paramètre consistant en un tableau ou une valeur de référence comprenant au moins une valeur de ladite base de données ou d'une autre base de données comprenant des valeurs correspondant à des moniteurs de vitesse laser connus ; et
- un paramètre consistant en une valeur de retard comprenant une valeur déterminée par le retard de temps dans les composants électriques des transpondeurs laser.

9. Transpondeur laser (1) selon l'une quelconque des revendications 1 à 8, **caractérisé en ce que** le microprocesseur (4) est programmé de manière à :
- calculer le moment escompté pour la réception du train suivant parmi les x trains d'impulsions de surveillance (65) comportant au moins une impulsion ;
- envoyer le train d'impulsions de brouillage (67) suivant comportant au moins une impulsion vers le convertisseur de signal de brouillage (5) au moment escompté ; et
- vérifier au moment où le train d'impulsions de surveillance (65) numéro y est attendu, si le moniteur de vitesse laser (7) continue d'émettre et, si tel est le cas, envoyer un train d'impulsions de brouillage (67) comportant au moins une impulsion au convertisseur de signal de brouillage (5) au moment où le train d'impulsions de surveillance (65) numéro y+1 est attendu.

10. Transpondeur laser (1) selon la revendication 9, **caractérisé en ce que** x = 5 et y = 9.

11. Transpondeur laser (1) selon la revendication 9 ou 10, **caractérisé en ce que** le microprocesseur (4) est programmé pour vérifier, tous les cinq trains d'impulsions de surveillance escomptés (65) comportant au moins une impulsion, si le moniteur de vitesse laser continue d'émettre et, si tel est le cas, pour envoyer des trains d'impulsions de brouillage (67) comportant au moins une impulsion vers le convertisseur de signal de brouillage (5) lors de la réception du train d'impulsions de surveillance (65) numéro six.

12. Transpondeur laser (1) selon l'une quelconque des revendications 1 à 11, **caractérisé en ce que** l'émetteur optique (6) consiste en une diode laser qui possède une longueur d'onde typique de 904 - 905 nm.

13. Transpondeur laser (1) selon l'une quelconque des revendications 1 à 12, **caractérisé en ce que** l'émetteur optique (6) consiste en une diode IR ayant une longueur d'onde typique de 870 nm.

14. Transpondeur laser (1) selon l'une quelconque des revendications 1 à 12, **caractérisé en ce qu'**une alarme sonore est activée si un train d'impulsions de surveillance (65) comportant au moins une impulsion a été reçu un nombre de fois supérieur à un nombre de fois prédéterminé.

15. Transpondeur laser (1) selon l'une quelconque des revendications 1 à 14, **caractérisé en ce que** la base de données est conçue de manière que les valeurs stockées puissent être changées.

16. Utilisation d'un transpondeur laser (1) selon l'une quelconque des revendications 1 à 15, pour désactiver un moniteur de vitesse laser (7), qui émet un faisceau laser de surveillance à un véhicule en déplacement en émettant un faisceau laser de brouillage vers le moniteur de vitesse laser (7), le faisceau laser de surveillance se présentant sous forme d'un signal de surveillance (8 ; s1 ; sₘ) comprenant des trains d'impulsions de surveillance (65) comprenant au moins une impulsion émise à une première fréquence f₁, **caractérisée en ce que** le faisceau laser de brouillage se présente sous forme d'un signal de brouillage (11 ; s2 ; sⱼ) comprenant des trains d'impulsions de brouillage (67) comprenant au moins une impulsion émise à une seconde fréquence f₃, ceci à l'aide d'un émetteur optique (6) pour émettre ledit signal de brouillage (11 ; s2 ; sⱼ) vers le moniteur de vitesse laser (7) en phase avec le signal de surveillance (8 ; s1 ; sₘ).

17. Utilisation d'un transpondeur laser (1) selon la revendication 16, **caractérisée en ce que** le transpondeur laser (1) comprend un microprocesseur (4) programmé pour :
- enregistrer le temps écoulé entre les réceptions de trains d'impulsions de surveillance successifs (65) comportant au moins une impulsion ;
- calculer, en fonction desdits enregistrements, le moment de réception du train d'impulsions de surveillance suivant (65) comportant au moins une impulsion ; et
- générer le signal de brouillage (11 ; s2 ; sⱼ) représentant les trains d'impulsions de brouillage (67) comportant au moins une impulsion, que l'on doit transmettre au dit moment.

18. Utilisation d'un transpondeur laser (1) selon la revendication 17, **caractérisée en ce que** le transpondeur laser (1) comprend en outre le microprocesseur (4) qui est programmé pour :
- calculer le moment escompté pour la réception du train suivant parmi les x trains d'impulsions de surveillance (65) comportant au moins une impulsion ;
- envoyer le train d'impulsions de brouillage suivant (67) comportant au moins une impulsion vers le convertisseur de signal de brouillage (5) au moment escompté ; et
- vérifier au moment où le train d'impulsions de surveillance (65) comportant au moins une impulsion et ayant le numéro y est attendu, si le moniteur de vitesse laser (7) continue d'émettre et, si tel est le cas, envoyer un train d'impulsions de brouillage (67) comportant au moins une impulsion au convertisseur de signal de brouillage (5) au moment où le train d'impulsions de surveillance (65) comportant au moins une impulsion et ayant le numéro y+1 est attendu.

19. Utilisation d'un transpondeur laser (1) selon la revendication 18, **caractérisée en ce que** le microprocesseur (4) est programmé pour vérifier, tous les cinq trains d'impulsions de surveillance escomptés (65) comportant au moins une impulsion, si le moniteur de vitesse laser (7) continue d'émettre et, si tel est le cas, pour envoyer des trains d'impulsions de brouillage (67) comportant au moins une impulsion vers le convertisseur de signal de brouillage (5) lors de la réception du train d'impulsions de surveillance (65) comportant au moins une impulsion et ayant le numéro six.

20. Utilisation d'un transpondeur laser (1) selon l'une quelconque des revendications 16 à 19, **caractérisée en ce qu'**une alarme sonore est adaptée pour être activée si un train d'impulsions de surveillance (65) comportant au moins une impulsion a été reçu un nombre de fois supérieur à un nombre de fois prédéterminé.

21. Utilisation d'un transpondeur laser (1) selon l'une quelconque des revendications 16 à 20, **caractérisée en ce que** le transpondeur comprend une base de données qui est conçue de manière que les valeurs stockées puissent être changées.

22. Procédé de désactivation d'un moniteur de vitesse laser (7), qui émet un faisceau laser de surveillance sous forme d'un signal de surveillance (8 ; s1 ; sₘ) à une première fréquence f₁ en émettant un faisceau laser de brouillage sous forme d'un signal de brouillage (11 ; s2 ; sⱼ) à une seconde fréquence f₃, **caractérisé en ce que** le procédé consiste en outre à :
- stocker dans la base de données d'un microprocesseur (4) des valeurs de référence pour ladite première fréquence f₁ d'au moins certains signaux parmi plusieurs signaux de surveillance connus (8 ; s1 ; sₘ) et, pour chacune desdites valeurs de référence, stocker également une valeur correspondante pour ladite seconde fréquence f₃ du signal de brouillage (8 ; s1 ; sₘ) ;
- recevoir le signal de surveillance (8 ; s1 ; sₘ) à l'aide d'un récepteur optique (2) ;
- convertir, à l'aide d'un convertisseur de signal de surveillance (3), le signal de surveillance (8 ; s1 ; sₘ) en un signal de surveillance électrique (9 ; s1 ; sₘ), et envoyer ledit signal en qualité d'entrée au microprocesseur (4) ;
- comparer, à l'aide d'un programme du microprocesseur (4), le signal de surveillance électrique (9 ; s1 ; sₘ) aux dites valeurs de référence de la base de données, choisir la seconde fréquence correspondante f₃ ou, si aucune valeur de référence n'est trouvée, choisir la première fréquence f₁ en qualité de seconde fréquence f₃ ou en qualité de fréquence optionnelle stockée dans la base de données, et générer un signal électrique de brouillage (10 ; s2 ; sⱼ) à l'aide de la fréquence choisie ;
- convertir, à l'aide d'un convertisseur de signal de brouillage (5), ledit signal électrique de brouillage (10 ; s2 ; sⱼ) en signal de brouillage (11 ; s2 ; sⱼ) ; et
- envoyer à l'aide d'un émetteur optique (6) ledit signal de brouillage (11 ; s2 ; sⱼ) au moniteur de vitesse laser (7).
